# EUROPÄISCHE PATENTANMELDUNG

(11) **EP 2 163 956 A1**
(43) Veröffentlichungstag der Anmeldung: **17.03.2010**
(21) Anmeldenummer: 08015970.0
(22) Anmeldetag: 10.09.2008
(51) Int. Cl.: G05B 19/042

(54) **Verfahren zur Bereitstellung einer Steuerungsinformation für eine verteilte Operation in einem Automatisierungssystem, Computerprogramm und Automatisierungssystem**

(71) Anmelder: Siemens Aktiengesellschaft, 80333 München (DE)
(72) Erfinder: Herberth, Harald, 90522 Oberasbach (DE); Kröger, Ulrich, 67657 Kaiserslautern (DE); Sobihard, Allan, 84104 Bratislava (SK)

(57) **Zusammenfassung**

Eine verteilte Operation in einem Automatisierungssystem wird mittels zumindest eines ersten und zweiten rechnerbasierten Objekts durchgeführt. Anhand der Steuerungsinformation wird eine Eigenschaft und/oder Funktion des ersten und/oder zweiten rechnerbasierten Objekts beeinflußt oder ermittelt. Die Steuerungsinformation umfaßt Angaben über einen Parameteridentifikator, einen dem Parameteridentifikator zugeordneten Wert, einen Gültigkeitsbereich und ein Fernzugriffsattribut. Die Steuerungsinformation wird entsprechend dem von ihr umfaßten Gültigkeitsbereich in einer nach Gültigkeitsbereichen gegliederten dem ersten rechnerbasierten Objekt zugeordneten Speichereinheit abrufbar bereitgestellt. Die Steuerungsinformation wird bei einem vom ersten an das zweite rechnerbasierte Objekt gerichteten Funktions- oder Dienstaufruf zur Durchführung der verteilten Operation an das zweite rechnerbasierte Objekt übermittelt und in einer nach Gültigkeitsbereichen gegliederten dem zweiten rechnerbasierten Objekt zugeordneten Speichereinheit abrufbar bereitgestellt.

## Beschreibung

Aufgrund einer ständig steigenden Bedeutung von Informationstechnik für Automatisierungssysteme gewinnen Verfahren zur Sicherung von vernetzten Systemkomponenten wie Überwachungs-, Steuerungs- und Regelungseinrichtungen, Sensoren und Aktoren gegenüber unberechtigtem Zugriff verstärkt an Bedeutung. Im Vergleich zu anderen Anwendungsgebieten der Informationstechnik kommt Datenintegrität in der Automatisierungstechnik eine besonders hohe Bedeutung zu. Insbesondere bei einer Erfassung, Auswertung und Übermittlung von Meß- und Steuerungsdaten ist sicherzustellen, daß vollständige und unveränderte Daten vorliegen. Absichtliche, unabsichtliche oder durch einen technischen Fehler bedingte Veränderungen sind zu vermeiden. Besondere Anforderungen in der Automatisierungstechnik für sicherheitstechnische Verfahren resultieren außerdem aus einem Meldungsverkehr mit verhältnismäßig vielen, aber relativ kurzen Nachrichten. Daneben ist einer Echtzeitfähigkeit eines Automatisierungssystems und seiner Systemkomponenten Rechnung zu tragen.

Für eine Einräumung eines Zugriffs auf durch Rechnereinheiten innerhalb eines Automatisierungssystems bereitgestellte Ressourcen und für an diesen durchgeführte Aktionen, wie Abfragen, Initialisierungen oder Änderungen, sind regelmäßig kontextbezogene Informationen bereitzustellen. Zu kontextbezogenen Informationen zählen beispielsweise Informationen über einen Benutzer oder dessen Berechtigungen zur Ausführung einer Aktion oder über eine Konfiguration einer für eine benutzerausgewählte Aktion verwendete Rechnereinheit. Wird anhand eines rechnerbasierten Objekts ein Dienst des Automatisierungssystems innerhalb einer dienstorientierten Architektur bereitgestellt, so sind für einen aufgerufenen Dienst obige kontextbezogenen Informationen verfügbar zu machen.

Kontextbezogene Informationen werden bisher beispielsweise durch zusätzliche Parameter für eine Funktion zur Implementierung eines Dienstes bereitgestellt. Zur durchgängigen Anwendung eines derartigen Ansatzes in einem verteilten Automatisierungssystem muß jede Funktion oder Anwendung automatisch kontextbezogene Informationen identifizieren und auswerten können. Außerdem muß sichergestellt sein, daß kontextbezogene Informationen durch sämtliche Funktionen oder Anwendungen einheitlich verwaltet werden, insbesondere gespeichert und für andere Dienste bereitgestellt werden. Dies bedeutet, daß globale Objekte zur Verwaltung von kontextbezogenen Informationen bereitzustellen sind, was äußerst aufwendig sowie fehleranfällig ist und wenig Flexibilität hinsichtlich möglicher Änderungen an einer Systemkonfiguration bietet.

Alternativ zu obigem Ansatz werden kontextbezogene Informationen bei Stub-Skeleton-basierten Systemarchitekturen durch zusätzliche Zustandsinformationen für einen Stub oder Skeleton bereitgestellt. Hierbei werden die kontextbezogenen Informationen für den Stub verfügbar gemacht und können vom Skeleton abgefragt werden. Allerdings müssen auch in diesem Fall sämtliche Funktionen oder Anwendungen entsprechende globale Objekte identifizieren, auswerten und verwalten können. Eine inkonsistente Behandlung globaler Objekte zur Verwaltung kontextspezifischer Informationen durch einzelne Funktionen oder Anwendungen kann zu nichtfunktionsfähigen Zuständen eines Automatisierungssystems führen.

Der vorliegenden Erfindung liegt daher die Aufgabe zugrunde, ein flexibles und sicheres Verfahren zur Bereitstellung einer Steuerungsinformation für eine verteilte Operation in einem Automatisierungssystem zu schaffen, sowie eine geeignete technische Realisierung des Verfahrens anzugeben.

Diese Aufgabe wird erfindungsgemäß durch ein Verfahren mit den in Anspruch 1 angegebenen Merkmalen, durch ein Computerprogramm mit den in Anspruch 11 angegebenen Merkmalen sowie durch ein Automatisierungssystem mit den in Anspruch 12 angegebenen Merkmalen gelöst. Vorteilhafte Weiterbildungen der vorliegenden Erfindung sind in den abhängigen Ansprüchen angegeben.

Erfindungsgemäß wird anhand der Steuerungsinformation eine Eigenschaft bzw. Funktion eines ersten und/oder zweiten rechnerbasierten Objekts beeinflußt oder ermittelt. Die verteilte Operation wird mittels zumindest des ersten und zweiten rechnerbasierten Objekts durchgeführt. Des weiteren umfaßt die Steuerungsinformation Angaben über einen Parameteridentifikator, einen dem Parameteridentifikator zugeordneten Wert, einen Gültigkeitsbereich und ein Fernzugriffsattribut. Durch den Gültigkeitsbereich kann beispielsweise eine Zuordnung der Steuerungsinformation zu einem Thread, zu einem Rechenprozeß oder zu einem Dienst angegeben sein. Des weiteren kann durch das Fernzugriffsattribut ein Funktionsaufruf von einem Client über ein Datennetz an einen Server innerhalb des Automatisierungssystems kennzeichenbar sein. Durch das Fernzugriffsattribut kann also festgelegt werden, ob die Steuerungsinformation an weitere Rechnereinheiten innerhalb des Automatisierungssystems weiterzuleiten ist.

Darüber hinaus wird die Steuerungsinformation entsprechend dem von ihr umfaßten Gültigkeitsbereich in einer nach Gültigkeitsbereichen gegliederten dem ersten rechnerbasierten Objekt zugeordneten Speichereinheit abrufbar bereitgestellt. Die Steuerungsinformation wird bei einem vom ersten an das zweite rechnerbasierte Objekt gerichteten Funktions- oder Dienstaufruf zur Durchführung der verteilten Operation an das zweite rechnerbasierte Objekt übermittelt. Außerdem wird die Steuerungsinformation in einer nach Gültigkeitsbereichen gegliederten dem zweiten rechnerbasierten Objekt zugeordneten Speichereinheit abrufbar bereitgestellt. Die vorliegende Erfindung ermöglicht eine einfach und durchgängig in einem verteilten Automatisierungssystem implementierbare Bereitstellung einer Steuerungsinformation für eine verteilte Operation, die koordinierte auf unterschiedlichen Rechnereinheiten des Automatisierungssystems ablaufende Teiloperationen umfaßt. Die Rechnereinheiten können dabei beispielsweise auch virtualisierte Maschinen sein.

Entsprechend einer vorteilhaften Weiterbildung der vorliegenden Erfindung wird die dem ersten oder zweiten rechnerbasierten Objekt zugeordnete Speichereinheit bei einem Zugriff auf das erste oder zweite rechnerbasierte Objekt nach einem für den Zugriff angegebenen Parameteridentifikator durchsucht. Eine dem für den Zugriff angegebenen Parameteridentifikator zugeordnete Steuerungsinformation wird bei einem erfolgreichen Durchsuchen für eine auf das erste oder zweite rechnerbasierte Objekt gerichtete Aktion bereitgestellt. Beispielsweise kann durch den Gültigkeitsbereich eine Zuordnung der Steuerungsinformation zu einem Thread, zu einem Rechenprozeß oder zu einem Dienst angegeben sein. Bei einem Durchsuchen der dem ersten oder zweiten rechnerbasierten Objekt zugeordneten Speichereinheit wird dann beispielsweise in hierarchischer Reihenfolge zuerst ein Speicherbereich für Threads, dann ein Speicherbereich für Dienste und dann ein Speicherbereich für Rechenprozesse untersucht.

Vorzugsweise wird anhand des ersten bzw. zweiten rechnerbasierten Objekts ein Dienst des Automatisierungssystems innerhalb einer dienstorientierten Architektur bereitgestellt. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Hieraus resultiert eine besonders sichere und flexible Bereitstellung einer Steuerungsinformation für ein rechnerbasiertes Objekt in einem Automatisierungssystem.

Rechnerbasierte Objekte sind beispielsweise ohne Beschränkung der Allgemeinheit dieses Begriffs Betriebssysteme, Steuerungs- oder Anwendungsprogramme, durch Betriebssysteme, Steuerungs- oder Anwendungsprogramme bereitgestellte Dienste, Dienstkomponenten, Leistungsmerkmale, Funktionen oder Prozeduren, Zugriffsrechte auf Systemressourcen oder Peripheriegeräte sowie auf einem Speichermedium befindliche Daten. Funktionen oder Prozeduren umfassen dabei insbesondere auch eine Freigabe von Zugriffsberechtigungen in einem Automatisierungssystem. Ein rechnerbasiertes Objekt kann außerdem einem Rechenprozeß zugeordnet sein, der sämtliche Einheiten eines in einen Arbeitsspeicher geladenen ausführbaren Programms umfaßt. Unter einem Rechner sind beispielsweise PCs, Notebooks, Server, PDAs, Mobiltelefone sowie Steuerungs- und Regelungsmodule, Sensoren oder Aktoren in der Automatisierungs-, Fahrzeug-, Kommunikations- oder Medizintechnik zu verstehen - allgemein Einrichtungen, in denen Computerprogramme ablaufen.

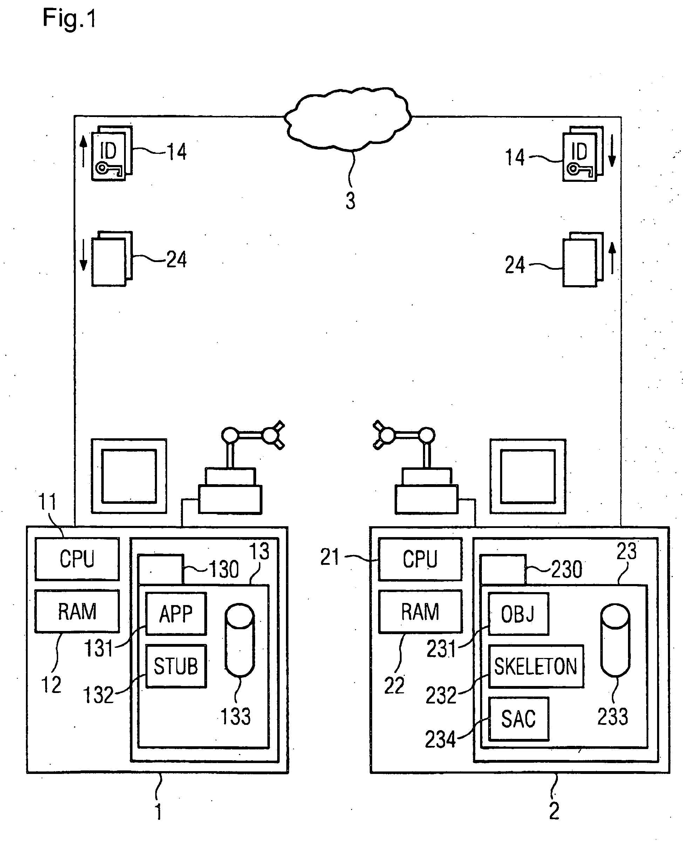

Die Erfindung wird nachfolgend an einem Ausführungsbeispiel anhand der Zeichnung näher erläutert. Es zeigt
- Figur 1: eine schematische Darstellung eines Automatisierungssystems zur Realisierung eines Verfahrens zur Bereitstellung einer Steuerungsinformation für eine verteilte Operation in einem Automatisierungssystem,
- Figur 2: eine schematische Darstellung eines Meldungsaustauschs zwischen mehreren an einer verteilten Operation beteiligten Rechnereinheiten eines Automatisierungssystems.

Das in der Figur dargestellte Automatisierungssystem umfaßt eine erste Rechnereinheit 1 und eine zweite Rechnereinheit 2, die als Netzknoten über ein Kommunikationsnetz 3 miteinander verbunden sind. Beide Rechnereinheiten 1, 2 umfassen zumindest jeweils einen Prozessor 11, 21, einen Arbeitsspeicher 12, 22 und eine Festplatte 13, 23 zur nichtflüchtigen Speicherung von Programmcode, Anwendungsdaten und Benutzerdaten.

Auf der Festplatte 13 der ersten Rechnereinheit 1 ist Programmcode 130 zur Bereitstellung eines ersten Dienstes innerhalb einer dienstorientierten Architektur gespeichert, während anhand von auf der Festplatte 23 der zweiten Rechnereinheit gespeichertem Programmcode ein zweiter Dienst bereitgestellt wird. Der Programmcode 130 für den ersten Dienst umfaßt Programmcode 131 für eine Client-Anwendung und Programmcode 132 zur Implementierung eines Stub, der Dienstanforderungen der Client-Anwendung entgegennimmt und nach angeforderte Dienste bereitstellenden Netzknoten innerhalb des Automatisierungssystems auflöst. Außerdem ist dem ersten Dienst eine Speichereinheit 133 zur Bereitstellung einer Steuerungsinformation für ein auf der Festplatte 23 der zweiten Rechnereinheit 2 gespeichertes rechnerbasiertes Objekt 231 zugeordnet, anhand dessen der zweite Dienst implementiert wird. Mittels der Client-Anwendung und des rechnerbasierten Objekts 231 wird im vorliegenden Ausführungsbeispiel eine verteilte Operation innerhalb des Automatisierungssystems durchgeführt.

Anhand der Steuerungsinformation ist es möglich, eine Eigenschaft bzw. Funktion des rechnerbasierten Objekts 231 zu beeinflussen oder zu ermitteln. Die Steuerungsinformation umfaßt Angaben über einen Parameteridentifikator, einen dem Parameteridentifikator zugeordneten Wert, einen Gültigkeitsbereich und ein Fernzugriffsattribut. Des weiteren wird die Steuerungsinformation entsprechend dem von ihr umfaßten Gültigkeitsbereich in einem ausgewählten Speicherbereich der dem ersten Dienst zugeordneten Speichereinheit 133 abrufbar bereitgestellt.

Durch den von der Steuerungsinformation umfaßten Gültigkeitsbereich ist eine Zuordnung der Steuerungsinformation zu einem Thread, zu einem Rechenprozeß oder zu einem Dienst angegeben. Im vorliegenden Anwendungsbeispiel ist durch die Gültigkeitsinformation ein Dienst angegeben. Das Fernzugriffsattribut dient zur Kennzeichnung eines Funktionsaufrufs von einem Client über ein Datennetz an einen Server innerhalb des Automatisierungssystems, was im vorliegenden Anwendungsbeispiel der Fall ist.

Auf der Festplatte 23 ist neben dem rechnerbasierten Objekt 231, Programmcode 232 zur Implementierung eines mit dem o.g. Stub zusammenwirkenden Skeleton und Programmcode 234 zur Implementierung einer Authentifizierungskomponente für den zweiten Dienst gespeichert. Der Skeleton vermittelt im vorliegenden Anwendungsbeispiel eine durch den Stub aufgelöste Dienstanforderung seitens der obigen Client-Anwendung an das rechnerbasierte Objekt weiter. Der auf der Festplatte 13, 23 gespeicherte Programmcode 131, 132, 232, 234 sowie das rechnerbasierte Objekt 231 sind in den Arbeitsspeicher 12, 22 der ersten Rechnereinheit 1 bzw. der zweiten Rechnereinheit 2 ladbar und durch den jeweiligen Prozessor 11, 21 zur Bereitstellung des ersten und zweiten Dienstes ausführbar.

Das rechnerbasierte Objekt 231 ist im vorliegenden Ausführungsbeispiel ein Steuerungsprogramm zur Ermittlung eines Meßergebnisses, das durch die zweite Rechnereinheit 2 als computergestützte Sensoreinheit erfaßt wird und von der auf der ersten Rechnereinheit 1 ablaufenden Client-Anwendung angefordert wird. Das Steuerungsprogramm dient zur Ansteuerung von meßtechnischer Peripherie der zweiten Rechnereinheit 2. Auf Basis eines empfangenen Meßergebnisses steuert die Client-Anwendung meßtechnische oder aktorische Peripherie der ersten Rechnereinheit 1 an, wie Sensoren oder Roboter.

Bei der Steuerungsinformation handelt es sich im vorliegenden Ausführungsbeispiel um ein Token zur Benutzerauthentifizierung, wobei ein Benutzer auch ein Gerät innerhalb des Automatisierungssystems sein kann. In anderen Anwendungsszenarien kann die Steuerungsinformation auch allgemeine Benutzerinformationen, Umgebungsvariablen der Client-Anwendung oder Maschinenkonfigurationsdaten umfassen.

Bei einem von der Client-Anwendung an das rechnerbasierte Objekt 231 gerichteten Aufruf des zweiten Dienstes wird durch die Client-Anwendung bei Ablauf auf der ersten Rechnereinheit die dem ersten Dienst zugeordneten Speichereinheit 133 nach einem für den Zugriff angegebenen Parameteridentifikator durchsucht. Im vorliegenden Fall ist als Parameteridentifikator Token angegeben. Der dem Token zugeordnete Wert ist eine Kennung eines den zweiten Dienst über die Client-Anwendung aufrufenden Benutzers. Für den Gültigkeitsbereich des Token ist im vorliegenden Beispiel Prozeß angegeben, da das Token für sämtliche Threads innerhalb der Client-Anwendung benutzt werden soll. Bei einem erfolgreichen Durchsuchen wird das Token für eine auf das rechnerbasierte Objekt gerichtete Aktion durch die erste Rechnereinheit 1 bereitgestellt. Die dem ersten oder zweiten rechnerbasierten Objekt zugeordnete Speichereinheit wird in hierarchischer Reihenfolge zuerst nach Tokens mit dem Gültigkeitsbereich Thread, dann nach Tokens mit dem Gültigkeitsbereich Dienst und schließlich nach Tokens mit dem Gültigkeitsbereich Prozeß untersucht. Das Durchsuchen wird bei einem ersten ermittelten Suchergebnis beendet. Auf diese Weise werden hierarchische Gültigkeitsbereiche unterstützt.

Eine den von der Client-Anwendung initiierten Aufruf des zweiten Dienstes und das ermittelte Token umfassende Meldung 14 wird über das Kommunikationsnetz 3 an die zweite Rechnereinheit 2 zur weiteren Bearbeitung übermittelt. Die Meldung 14 wird dabei zunächst durch den Skeleton vorverarbeitet und danach durch das rechnerbasierte Objekt 231 ausgewertet. Dem Token wird bei einer Weiterleitung an die zweite Rechnereinheit 2 ein durch eine Vererbungsregel bestimmter Gültigkeitsbereich zugeordnet. Beispielsweise kann ein ursprünglicher Gültigkeitsbereich bei einer Weiterleitung grundsätzlich beibehalten werden, oder es kann grundsätzlich der Gültigkeitsbereich Thread zugeordnet werden. Weitere Zuordnungsschemata sind möglich, die sich beispielsweise an gängige Vererbungsmechanismen für Objektattribute und -methoden anlehnen.

Nach einer erstmaligen erfolgreichen Authentifizierung anhand des Token durch die Authentifizierungskomponente des zweiten Dienstes erfolgt eine Einräumung eines Zugriffs auf das rechnerbasierte Objekt 231 und eine Speicherung des Tokens in einer dem zweiten Dienst zugeordneten Speichereinheit 233. Das Token wird in einem dem jeweiligen Gültigkeitsbereich zugeordneten Speicherbereich der dem zweiten Dienst zugeordneten Speichereinheit 233 abrufbar bereitgestellt. Damit kann auf das Token beispielsweise für eine spätere Verwendung bei einer erneuten Zugriffsanforderung zurückgegriffen werden. Abschließend wird eine Meldung 24 mit einem anhand des rechnerbasierten Objekts ermittelten Meßergebnis zur Auswertung an die erste Rechnereinheit 1 übermittelt.

Im Hinblick auf einen Meldungsaustausch zur Steuerung und Überwachung der Rechnereinheiten 1-2 ist sicherzustellen, daß Meldungen auf einem Weg von einem Sender zu einem Empfänger nicht verfälscht werden. Andernfalls könnte dies zu Störungen oder Schäden im Automatisierungssystem führen. Außerdem kann ein Interesse darin bestehen, daß beispielsweise ein infolge eines Ablaufs eines Steuerungsprogramms erfaßtes Meßergebnis nur durch einen berechtigten Benutzer abfragbar ist und eine übermittelte Meldung mit dem Meßergebnis nicht durch unautorisierte Benutzer abgefangen und ausgelesen werden kann.

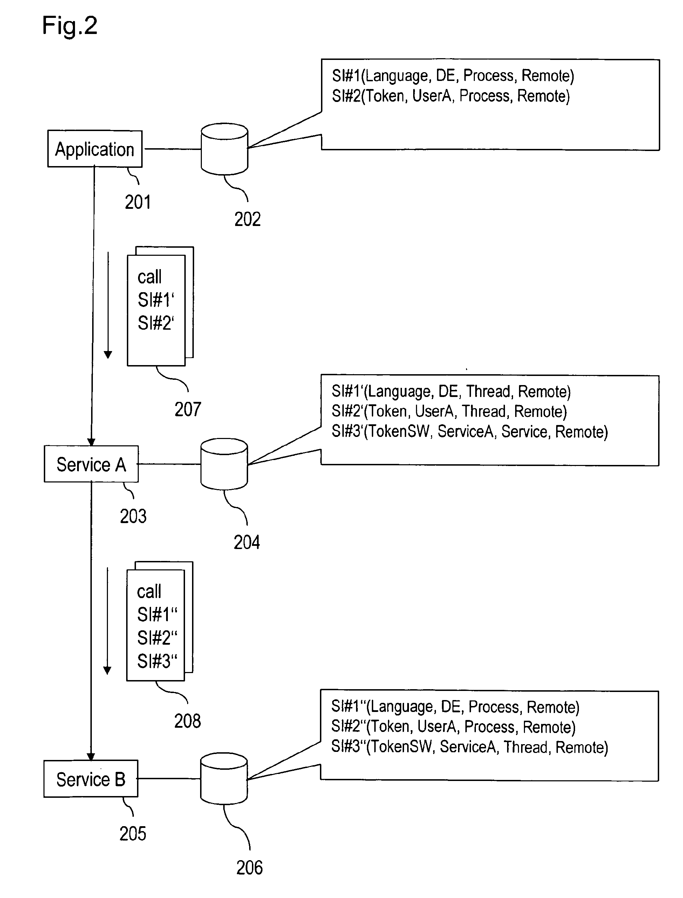

In Figur 2 sind beispielhaft drei an einer verteilten Operation beteiligte Rechnereinheiten 201, 203, 205 dargestellt. Auf einer ersten Rechnereinheit 201 läuft eine die verteilte Operation initiierende Anwendung ab, die einen durch eine zweite Rechnereinheit 203 bereitgestellten Dienst nutzt. Der durch die zweite Rechnereinheit 203 bereitgestellte Dienst greift wiederum auf einen durch eine dritte Rechnereinheit 205 bereitgestellten Dienst zurück. Die Dienste und die Anwendung sind im vorliegenden Beispiel derart konfiguriert, daß für einen Zugriff eine Authentifizierung erforderlich ist. So muß sich die Anwendung gegenüber dem durch die zweite Rechnereinheit 203 bereitgestellten Dienst authentifizieren und dieser wiederum gegenüber dem durch die dritte Rechnereinheit 205 bereitgestellten Dienst.

Zur Authentifizierung ist in einer der auf der ersten Rechnereinheit 201 ablaufenden Anwendung zugeordneten ersten Speichereinheit 202 eine Steuerungsinformation gespeichert. Diese Steuerungsinformation weist den Parameteridentifikator Token, den Wert UserA entsprechend der Kennung des Benutzers der Anwendung, den Gültigkeitsbereich Prozeß und ein aktiviertes Fernzugriffsattribut auf. Zur Berücksichtigung von länderspezifischen Lokalisierungs- bzw. Sprachinformationen ist in der ersten Speichereinheit 202 noch eine Steuerungsinformation gespeichert, die den Parameteridentifikator Language, den Wert DE für Deutsch, den Gültigkeitsbereich Prozeß und ein aktiviertes Fernzugriffsattribut aufweist.

Zur Nutzung des durch die zweite Rechnereinheit 203 bereitgestellten Dienstes wird von der ersten Rechnereinheit 201 eine erste Meldung 207 mit einem Dienstaufruf und Steuerungsinformationen übermittelt, die aus den in der ersten Speichereinheit 202 gespeicherten Steuerungsinformationen entsprechend einer Vererbungsregel abgeleitet sind. Entsprechend der verwendeten Vererbungsregel werden sämtliche Attribute bis auf den Gültigkeitsbereich unverändert übernommen. Der Gültigkeitsbereich wird von Prozeß auf Thread geändert, da die Steuerungsinformationen nur für einen Thread innerhalb des durch die zweite Rechnereinheit 203 bereitgestellten Dienstes gültig sind. Die von der ersten Meldung 207 umfaßten Steuerungsinformationen werden in einer dem durch die zweite Rechnereinheit 203 bereitgestellten Dienst zugeordneten zweiten Speichereinheit 204 gespeichert. In der zweiten Speichereinheit 204 wird außerdem eine Steuerungsinformation zur Authentifizierung des durch die zweite Rechnereinheit 203 bereitgestellten Dienstes gespeichert. Diese Steuerungsinformation umfaßt den Parameteridentifikator TokenSW für eine Authentifizierung einer Softwarekomponente, den Wert ServiceA als Bezeichnung des durch die zweite Rechnereinheit 203 bereitgestellten zu authentifizierenden Dienstes, den Gültigkeitsbereich Dienst und ein aktiviertes Fernzugriffsattribut.

Für eine Anforderung des durch die dritte Rechnereinheit 205 bereitgestellten Dienstes wird von der zweiten Rechnereinheit 202 eine zweite Meldung 208 mit einem Dienstaufruf und Steuerungsinformationen übermittelt, die aus den in der zweiten Speichereinheit 204 gespeicherten Steuerungsinformationen entsprechend einer Vererbungsregel abgeleitet sind. Entsprechend der verwendeten Vererbungsregel werden wieder sämtliche Attribute bis auf den Gültigkeitsbereich unverändert übernommen. Der Gültigkeitsbereich wird im vorliegenden Fall von Dienst auf Thread geändert, da die Steuerungsinformationen nur für einen Thread innerhalb des durch die dritte Rechnereinheit 205 bereitgestellten Dienstes gültig sind. Die von der zweiten Meldung 208 umfaßten Steuerungsinformationen werden in einer dem durch die dritte Rechnereinheit 205 bereitgestellten Dienst zugeordneten dritten Speichereinheit 206 gespeichert. Anhand der in den Speichereinheiten 202, 204, 206 gespeicherten Steuerungsinformationen wird die verteilte Operation dann durch die Anwendung und die Dienste durchgeführt, wobei Authentifizierungen implizit durch Auswertung der Steuerungsinformationen erfolgen.

Das vorangehend beschriebene Verfahren wird in einen Arbeitsspeicher eines Rechners ladbares Computerprogramm implementiert, das zumindest einen Codeabschnitt aufweist, bei dessen Ausführung die Steuerungsinformation entsprechend einem von ihr umfaßten Gültigkeitsbereich in einer nach Gültigkeitsbereichen gegliederten einem ersten rechnerbasierten Objekt zugeordneten Speichereinheit abrufbar bereitgestellt wird. Anhand der Steuerungsinformation ist eine Eigenschaft und/oder Funktion des ersten oder eines zweiten rechnerbasierten Objekts zur Durchführung einer verteilten Operation beeinflußbar oder ermittelbar. Außerdem umfaßt die Steuerungsinformation Angaben über einen Parameteridentifikator, einen dem Parameteridentifikator zugeordneten Wert, einen Gültigkeitsbereich und ein Fernzugriffsattribut. Des weiteren wird die Steuerungsinformation bei einem vom ersten an das zweite rechnerbasierte Objekt gerichteten Funktions- oder Dienstaufruf zur Durchführung der verteilten Operation an das zweite rechnerbasierte Objekt übermittelt und ein abrufbares Bereitstellen der Steuerungsinformation in einer nach Gültigkeitsbereichen gegliederten dem zweiten rechnerbasierten Objekt zugeordneten Speichereinheit veranlaßt, wenn das Computerprogramm im Rechner abläuft.

Die Anwendung der vorliegenden Erfindung ist nicht auf das beschriebene Ausführungsbeispiel beschränkt.

## Patentansprüche

1. Verfahren zur Bereitstellung einer Steuerungsinformation für eine verteilte Operation in einem Automatisierungssystem, bei dem
- die verteilte Operation mittels zumindest eines ersten und zweiten rechnerbasierten Objekts durchgeführt wird,
- anhand der Steuerungsinformation eine Eigenschaft und/oder Funktion des ersten und/oder zweiten rechnerbasierten Objekts beeinflußt oder ermittelt wird,
- die Steuerungsinformation Angaben über einen Parameteridentifikator, einen dem Parameteridentifikator zugeordneten Wert, einen Gültigkeitsbereich und ein Fernzugriffsattribut umfaßt,
- die Steuerungsinformation entsprechend dem von ihr umfaßten Gültigkeitsbereich in einer nach Gültigkeitsbereichen gegliederten dem ersten rechnerbasierten Objekt zugeordneten Speichereinheit abrufbar bereitgestellt wird,
- die Steuerungsinformation bei einem vom ersten an das zweite rechnerbasierte Objekt gerichteten Funktions- oder Dienstaufruf zur Durchführung der verteilten Operation an das zweite rechnerbasierte Objekt übermittelt und in einer nach Gültigkeitsbereichen gegliederten dem zweiten rechnerbasierten Objekt zugeordneten Speichereinheit abrufbar bereitgestellt wird.

2. Verfahren nach Anspruch 1,
bei dem die dem ersten oder zweiten rechnerbasierten Objekt zugeordnete Speichereinheit bei einem Zugriff auf das erste oder zweite rechnerbasierte Objekt nach einem für den Zugriff angegebenen Parameteridentifikator in einer vorgebbaren Reihenfolge nach Gültigkeitsbereichen gegliedert durchsucht wird, und bei dem eine dem für den Zugriff angegebenen Parameteridentifikator zugeordnete Steuerungsinformation bei einem erfolgreichen Durchsuchen für eine auf das erste oder zweite rechnerbasierte Objekt gerichtete Aktion bereitgestellt wird.

3. Verfahren nach einem der Ansprüche 1 oder 2,
bei dem die Steuerungsinformation bei einer Bereitstellung in der dem zweiten rechnerbasierten Objekt zugeordneten Speichereinheit einem durch eine Vererbungsregel bestimmten Gültigkeitsbereich zugeordnet wird.

4. Verfahren nach Anspruch einem der Ansprüche 1 bis 3,
bei dem anhand des ersten und/oder zweiten rechnerbasierten Objekts ein Dienst des Automatisierungssystems innerhalb einer dienstorientierten Architektur bereitgestellt wird.

5. Verfahren nach Anspruch 4,
bei dem die Steuerungsinformation ein Token umfaßt, das bei einer Anforderung eines Zugriffs auf das erste und/oder zweite rechnerbasierte Objekt an den Dienst zur Überprüfung übermittelt wird.

6. Verfahren nach Anspruch 5,
bei dem ein Zugriff auf das erste und/oder zweite rechnerbasierte Objekt bei einem positiven Überprüfungsergebnis durch den Dienst eingeräumt wird.

7. Verfahren nach einem der Ansprüche 1 bis 6,
bei dem durch den Gültigkeitsbereich eine Zuordnung der Steuerungsinformation zu einem Thread, zu einem Rechenprozeß oder zu einem Dienst angegeben ist.

8. Verfahren nach Anspruch 7,
bei dem bei einem Durchsuchen der dem ersten oder zweiten rechnerbasierten Objekt zugeordneten Speichereinheit zuerst ein Speicherbereich für Threads, dann ein Speicherbereich für Dienste und dann ein Speicherbereich für Rechenprozesse untersucht wird.

9. Verfahren nach Anspruch 8,
bei dem das Durchsuchen bei einem ersten ermittelten Suchergebnis beendet wird.

10. Verfahren nach einem der Ansprüche 1 bis 9,
bei dem durch das Fernzugriffsattribut ein Funktionsaufruf von einem Client über ein Datennetz an einen Server innerhalb des Automatisierungssystems kennzeichenbar ist.

11. Computerprogramm zur Bereitstellung einer Steuerungsinformation, das in einen Arbeitsspeicher eines Rechners ladbar ist und zumindest einen Codeabschnitt aufweist, bei dessen Ausführung
- die Steuerungsinformation entsprechend einem von ihr umfaßten Gültigkeitsbereich in einer nach Gültigkeitsbereichen gegliederten einem ersten rechnerbasierten Objekt zugeordneten Speichereinheit abrufbar bereitgestellt wird, wobei anhand der Steuerungsinformation eine Eigenschaft und/oder Funktion des ersten oder eines zweiten rechnerbasierten Objekts zur Durchführung einer verteilten Operation beeinflußbar oder ermittelbar ist, und wobei die Steuerungsinformation Angaben über einen Parameteridentifikator, einen dem Parameteridentifikator zugeordneten Wert, einen Gültigkeitsbereich und ein Fernzugriffsattribut umfaßt,
- die Steuerungsinformation bei einem vom ersten an das zweite rechnerbasierte Objekt gerichteten Funktions- oder Dienstaufruf zur Durchführung der verteilten Operation an das zweite rechnerbasierte Objekt übermittelt und ein abrufbares Bereitstellen der Steuerungsinformation in einer nach Gültigkeitsbereichen gegliederten dem zweiten rechnerbasierten Objekt zugeordneten Speichereinheit veranlaßt wird,
wenn das Computerprogramm im Rechner abläuft.

12. Automatisierungssystem mit
- mehreren über ein Kommunikationsnetz miteinander verbundenen Rechnereinheiten an Netzknoten des Automatisierungssystems,
- einer nach Gültigkeitsbereichen gegliederten einem ersten rechnerbasierten Objekt zugeordneten Speichereinheit zur abrufbaren Bereitstellung einer Steuerungsinformation entsprechend einem von ihr umfaßten Gültigkeitsbereich, wobei anhand der Steuerungsinformation eine Eigenschaft und/oder Funktion des ersten oder eines zweiten rechnerbasierten Objekts zur Durchführung einer verteilten Operation beeinflußbar oder ermittelbar ist, und wobei die Steuerungsinformation Angaben über einen Parameteridentifikator, einen dem Parameteridentifikator zugeordneten Wert, einen Gültigkeitsbereich und ein Fernzugriffsattribut umfaßt,
- einer Steuerungseinheit zum Übermitteln der Steuerungsinformation bei einem vom ersten an das zweite rechnerbasierte Objekt gerichteten Funktions- oder Dienstaufruf zur Durchführung der verteilten Operation an das zweite rechnerbasierte Objekt,
- einer Rechnereinheit zum abrufbaren Bereitstellen der Steuerungsinformation in einer nach Gültigkeitsbereichen gegliederten dem zweiten rechnerbasierten Objekt zugeordneten Speichereinheit.
